## Europäisches Patentamt

## European Patent Office

## Office européen des brevets

(19)

(11) Veröffentlichungsnummer: **0 065 255**
**A2**

(12) **EUROPÄISCHE PATENTANMELDUNG**

(21) Anmeldenummer: 82104058.1

(22) Anmeldetag: 11.05.82

(51) Int. Cl.³: **B 28 C 5/38,** B 28 C 5/14,
B 28 C 7/16, B 01 F 7/04

(30) Priorität: 19.05.81 DE 3119811
19.05.81 DE 8114775 U

(43) Veröffentlichungstag der Anmeldung: 24.11.82
Patentblatt 82/47

(84) Benannte Vertragsstaaten: FR GB IT SE

(71) Anmelder: **Karl Bauer Spezialtiefbau GmbH & Co. KG,**
**Wittelsbacherstrasse 5, D-8898 Schrobenhausen (DE)**
Anmelder: **Georg Schöndorfer GmbH & Co. KG,**
**Thomseestrasse 44, D-8230 Bad Reichenhall (DE)**

(72) Erfinder: **Schöndorfer, Georg, Ing. grad.,**
**Nonnerstrasse 2, D-8230 Bad Reichenhall (DE)**
Erfinder: **Fleischer, Johann, Ing. grad.,**
**Adolf-Kolping-Siedlung 30, D-8898 Schrobenhausen (DE)**
Erfinder: **Stocker, Manfred, Dr., Dipl.-Ing.,**
**Sachsenheim 41, A-5020 Elixhausen (AT)**
Erfinder: **Körber, Günther, Dipl.-Ing., Wiesbachstrasse 2,**
**D-8898 Schrobenhausen (DE)**

(74) Vertreter: **Federhen, Ludwig, Dr., Kronprinzstrasse 14,**
**D-7000 Stuttgart 1 (DE)**

(54) **Vorrichtung zum Mischen und Spritzen von Nassbeton.**

(57) Die Erfindung hat eine Vorrichtung zum Mischen und Spritzen von Nassbeton zum Gegenstand, die aus einer Vorrichtung zum Dosieren und pneumatischem Fördern von Trockenmischgut, einer Wirbelkammer und einer Nassspritzdüse besteht. In der Wirbelkammer ist eine schnell laufende Welle mit darauf sitzenden Flügeln zum Verwirbeln des durch einen Einlass pneumatisch geförderten Trockenmischgutes mit Wasser, flüssigen, staub- oder faserförmigen Zuschlagstoffen angeordnet, die durch Einlässe im Mantel der Wirbelkammer zugeführt werden. An dem dem Einlass abgewandten Ende der Wirbelkammer ist ein Auslass angeordnet, durch den der in der Wirbelkammer hergestellt Nassbeton durch den pneumatischen Druck der Dosier- und Fördervorrichtung weiter durch einen Schlauch der Nassspritzdüse zugeführt und von dieser ausgebracht wird. Die Flügel der Welle sind vorzugsweise verstellbar angeordnet und die Wirbelkammer ist vorzugsweise zylindrisch ausgebildet. Die auslassseitige Stirnwand kann als Speichenrad ausgebildet sein, in dessen Nabe die Welle gelagert ist, die sich fliegend in einen trichterförmigen Auslass erstreckt. Auf der Welle sind bei dieser Ausführungsform auf dem in den Trichter hineinragenden Teil vorzugsweise ein oder mehrere konische Räumflügel angeordnet, um Verstopfungen des Trichters zu verhindern.

0065255

Karl Bauer Spezialtiefbau G.m.b.H. & Co KG
8898 Schrobenhausen/ Obb.

Georg Schöndorfer G.m.b.H. & Co. KG
8230 Bad Reichenhall

<u>Vorrichtung zum Mischen und Spritzen</u>
<u>von Nassbeton.</u>

Die Erfindung betrifft eine Vorrichtung
zum Mischen und Spritzen von Nassbeton,
insbesondere in unterirdischen Hohlraumbauten. Die Vorrichtung besteht aus einer
Vorrichtung zum Dosieren und pneumatischen Fördern von Trockenmischgut wie
Zement, Sand, Kies und staub- oder faserförmigen Zuschlagstoffen, aus der das
Trockenmischgut einer Wirbelkammer
zugeführt wird, aus einer Wirbelkammer,
in der das Trockenmischgut mit Flüssigkeiten vermischt wird, und einer Nassspritzdüse.
Es sind Vorrichtungen zum Spritzen von
Nassbeton bekannt, bei denen das Wasser
dem Trockenmischgut unmittelbar an der
Spritzdüse zugeführt wird. Derartige
Vorrichtungen haben den Nachteil, dass
das Trockenmischgut nur unvollkommen
benetzt wird. Dadurch ist die Qualität
des Nassbetons häufig inhomogen. Ausserdem entwickelt sich viel Staub, der insbesondere in unterirdischen Hohlräumen zu
gesundheitlichen Schäden wie Silikose
führen kann.
Es ist ferner aus der OS 29 47 913 eine Vorrichtung bekannt, bei der das Trockenmischgut in einer Kneterschnecke mit
Wasser gemischt wird, der Nassbeton über
eine Verdichterschnecke einer Düse
zugeführt wird, die in eine Ringdüse
mündet und aus der mittels Druckluft der
Nassbeton der Spritzdüse zugeführt wird.
Diese Vorrichtung hat den Nachteil, dass
wegen der nicht unbedingt gleichmässigen
Förderung des Nassbetons aus der Verdichterschnecke die über die Ringdüse zugeführte Pressluft rückgestaut wird und in
die Kneterschnecke eindringt. Dadurch
wird eine gleichmässige Förderung des
Nassbetons verhindert. Ein weiterer
Nachteil entsteht dadurch, dass durch den
Rückstau der aus der Ringdüse zugeführten
Pressluft in der Kneterschnecke ein
Druckausgleich mit der Pressluft eintritt, mit der das Trockenmischgut der
Kneterschnecke zugeführt wird. Dadurch
kann ein völliger Stillstand der Förderung eintreten. Ein weiterer Nachteil
ist, dass faserförmiges Material, insbesondere Stahlfasern in der Kneterschnecke
einer starken mechanischen Beanspruchung
ausgesetzt sind und damit deren Wirksamkeit für den Nassbeton herabgesetzt wird.
Aufgabe der Erfindung ist die Entwicklung
einer Vorrichtung zum Mischen und Spritzen von Nassbeton insbesondere in unterirdischen Hohlräumen, durch die die
Nachteile der bekannten Vorrichtungen
überwunden werden.
Die Erfindung besteht in einer Vorrichtung, bei der in einer Wirbelkammer eine schnell laufende Welle angeordnet ist,
die mit Flügeln versehen ist und bei der
im Bereich des einen Endes ein Einlass
für das pneumatisch geförderte Trockenmischgut vorgesehen ist. Über den Mantel
der Wirbelkammer sind Einlässe für die
Zuführung von Wasser und flüssigen oder
staub- oder faserförmigen Zuschlagstoffen
und Zusatzmitteln vorgesehen. An der dem
Einlass abgewandten Seite der Wirbelkammer ist ein Auslass für das gemischte
Nassbetongut vorgesehen.

Die Welle der Wirbelkammer wird vorzugsweise mit 100 bis 400 Umdrehungen pro
Minute angetrieben, um eine möglichst
intensive Verwirbelung des Trockenmischgutes und eine möglichst gleichmässige
Zementleimbildung zu erzielen.

Es kann vorteilhaft sein, die Welle als
Hohlwelle auszubilden, um gegebenenfalls
zusätzliche Zusatzmittel der Mischung
auch nur zeitweise beizugeben.

Es ist vorteilhaft, die Flügel auf der
Welle verstellbar anzuordnen, um je nach
Anwendungsfall die pneumatische Mischgutförderung und die Intensität der Durchmischung zu beeinflussen.

Die Wirbelkammer ist vorzugsweise zylindrisch ausgebildet, um mittels der Flügel
den mechanischen Selbstreinigungseffekt
der Wirbelkammer zu begünstigen.

Bei einer zylindrischen Ausbildung der
Wirbelkammer ist es vorteilhaft, den
Einlass für das Trockenmischgut in der
einen und den Auslass für das Nassbetongut in der anderen Stirnfläche der Wirbelkammer anzuordnen. Vorzugsweise
werden Einlass und Auslass gegenüberliegend im unteren oder oberen Bereich
der Stirnflächen vorgesehen,. Es kann
jedoch auch von Vorteil sein, Einlass und
Auslass in den Bereichen versetzt anzuordnen.

Für bestimmte Mischungen ist es von
Vorteil, die auslasseitige Stirnwand
grossflächig zu durchbrechen, z.B. die
Stirnwand als Speichenrad auszubilden, in
dessen Nabe die Welle gelagert ist, und
deren Ende sich in einen anschliessenden
Trichter erstreckt, dessen Ende in den
Schlauch zur Spritzdüse übergeht.

Es kann auch von Vorteil sein, auf die
Ausbildung der auslasseitigen Stirnfläche
zu verzichten und den Zylindermantel in
einen Konus übergehen zu lassen. In
diesem Falle wird die Welle der Wirbelkammer in der einlasseitigen Stirnwand
fliegend gelagert.

Um Verstopfungen in dem Trichter zu
verhindern und eine ständige mechanische
Reinigung des Trichters zu gewährleisten,
ist auf dem Wellenende vorzugsweise ein
oder mehrere konische Räumflügel angeordnet.

Auf der Welle der Wirbelkammer sind
vorzugsweise mehrere Reihen von Flügeln
angeordnet, die gegeneinander versetzt
sind. Dadurch wird eine verbesserte
Verwirbelung des Mischgutes ermöglicht.

Bei einer zylindrischen Ausbildung der
Wirbelkammer entspricht vorzugsweise der
Durchmesser des von den sich drehenden Flügeln umschriebenen Zylinders nahezu
dem Innendurchmesser der Wirbelkammer.
Dadurch wird die Bildung von unerwünschten Ablagerungsräumen verhindert, was mit
Rücksicht auf die sehr schnelle Abbindung
des Nassbetongutes wesentlich ist.
Abgelagerter und ausgehärteter Beton
lässt sich nachträglich schwer aus der
Wirbelkammer entfernen. Aus diesem Grunde
ist es auch vorteilhaft, bei der Ausbildung der zylindrischen Wirbelkammer mit
einer geschlossenen, auslasseitigen
Stirnfläche in deren Bereich einen oder
mehrere Räumflügel vorzusehen.
Es ist auch möglich, die Wirbelkammer als
einen sich zum Auslass hin verjüngenden
Konus auszubilden, wobei die Welle
entweder fliegend in der einlasseitigen
Stirnfläche oder in der Stirnfläche und
in der Nabe eines im unteren Bereich des
Trichters angeordneten Speichenrades
gelagert ist.
Die erfindungsgemässe Vorrichtung hat in
jeder ihrer Ausgestaltungen gegenüber den
bekannten, sogenannten Trockenbetonspritzvorrichtungen den Vorteil, dass die
eigentliche Spritzdüse, die auch schlicht
in dem Ende des Schlauches, der von der
Wirbelkammer wegführt, bestehen kann, auf
Grund ihres geringen Gewichtes leicht zu
handhaben ist. Ferner ist die Benetzung
des Trockenmischgutes dem Einfluss des
Düsenführers entzogen, was eine gleichmässige Betonqualität zur Folge hat. Ein
weiterer Vorteil besteht darin, dass
unmittelbar an der Arbeitsstelle, die im

0065255

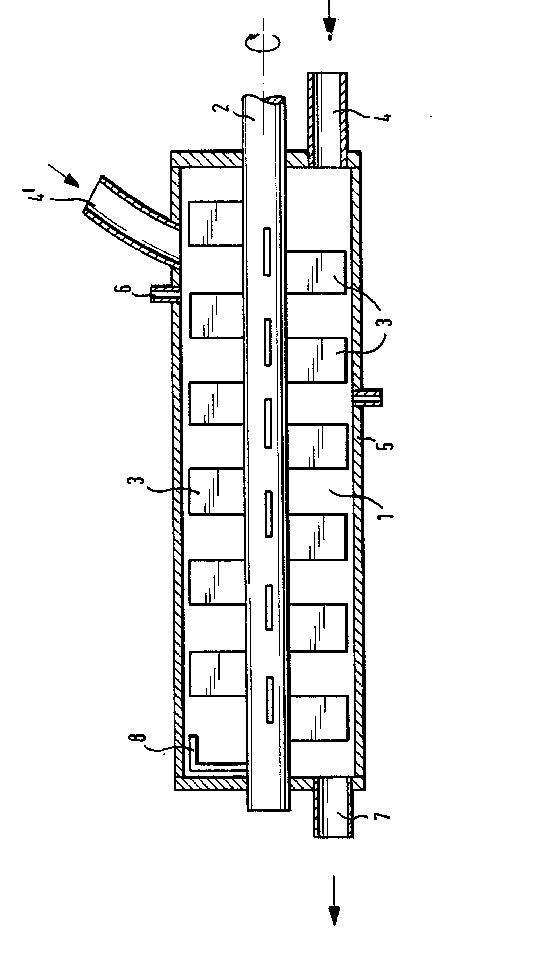

Tunnelbau meist sehr beengt ist, keine
Behinderung durch sperrige Geräte eintritt.
Zur weiteren Erläuterung wird auf ein in
der beigefügten Zeichnung dargestelltes
Ausführungsbeispiel der erfindungsgemässen Vorrichtung verwiesen.
Die Vorrichtung besteht aus einer Wirbelkammer 1, deren Mantel 5 zylindrisch
ausgebildet ist. In den Stirnflächen der
Wirbelkammer 1 ist zentrisch eine Welle 2
gelagert, auf der mehrere Reihen von
zueinander versetzten Flügeln 3 und an
der auslasseitigen Stirnfläche ein
Räumflügel 8 angeordnet sind. Im unteren
Bereich der Stirnflächen sind ein Einlass
4 und ein Auslass 7 angeordnet. Ferner
ist bei diesem Ausführungsbeispiel ein
weiterer Einlass 4´ im Bereich der
einlasseitigen Stirnfläche auf dem
Zylindermantel 5 vorgesehen. Schliesslich
sind über den Zylindermantel 5 mehrere
Einlässe 6 zur Zuführung von Wasser und
flüssigen oder staub- oder faserförmigen
Zusatzstoffen angeordnet.
Zum Herstellen des Nassbetons wird der
Wirbelkammer 1 das in einer Dosier- und
Fördervorrichtung bekannter Art vorgemischte Trockenmischgut über eine
Schlauchleitung pneumatisch zugeführt.
Das Trockenmischgut wird in der Wirbelkammer 1 durch die Flügel 3 mechanisch
verwirbelt und durch das über die Einlässe 6 zugeführte Wasser und sonstige
Flüssigkeiten benetzt. Gleichzeitig wird
das Mischgut durch den Luftstrom, der von

0065255

der Dosier- und Fördervorrichtung stammt,
pneumatisch weiter durch die Wirbelkammer
1 und durch den Auslass 7 zur Spritzdüse
gefördert.

Patentansprüche:

1. Vorrichtung zum Mischen und Spritzen von Nassbeton, bestehend aus einer Vorrichtung zum Dosieren und pneumatischen Fördern von Trockenmischgut, einer Wirbelkammer und einer Nasspritzdüse, dadurch gekennzeichnet, dass in der Wirbelkammer (1) eine schnell laufende Welle (2) angeordnet ist, auf der Flügel (3) angeordnet sind, dass im Bereich eines Endes der Wirbelkammer (1) ein Einlass (4,4') für das pneumatisch geförderte Trockenmischgut angeordnet ist, dass über den Mantel (5) der Wirbelkammer (1) Einlässe (6) für die Zuführung von Wasser und flüssigen, oder staub- oder faserförmigen Zuschlagstoffen und Zusatzmitteln vorgesehen sind und an der dem Einlass (4 bzw 4') des Trockenmischgutes abgewandten Seite ein Auslass (7) für das gemischte und pneumatisch von der Dosier- und Fördervorrichtung geförderte Nassbetongut zur Zuführung zu der Spritzdüse vorgesehen ist.

2. Vorrichtung gemäss Anspruch 1, dadurch gekennzeichnet, dass die Welle (2) der Wirbelkammer (1) mit 100 bis 400 Umdrehungen pro Minute angetrieben wird.

3. Vorrichtung gemäss Anspruch 1, dadurch gekennzeichnet, dass die Welle (2) der Wirbelkammer (1) eine Hohlwelle ist, die mit Auslässen zum Zuführen von Flüssigkeiten in die Wirbelkammer (1) versehen ist.

4. Vorrichtung gemäss Anspruch 1, dadurch gekennzeichnet, dass die Flügel (3) auf der Welle (2) der Wirbelkammer (1) verstellbar angeordnet sind.

5. Vorrichtung gemäss Anspruch 1, dadurch gekennzeichnet, dass die Wirbelkammer (1) zylindrisch ist.

6. Vorrichtung gemäss Ansprüchen 1 und 5, cadurch gekennzeichnet, dass der Einlass (4) für das Trockenmischgut in der einen und der Auslass (7) für das Nassbetongut in der anderen Stirnfläche der zylindrischen Wirbelkammer (1) angeordnet ist.

7. Vorrichtung gemäss Anspruch 6, dadurch gekennzeichnet, dass Einlass (4) und Auslass (7) in den Stirnflächen der zylindrischen Wirbelkammer (1) gegenüberliegend angeordnet sind.

8. Vorrichtung gemäss Anspruch 7, dadurch gekennzeichnet, dass die Ein- und Auslässe (4,7) in den Stirnflächen im unteren oder oberen Bereich angeordnet sind.

9. Vorrichtung gemäss Anspruch 6, dadurch gekennzeichnet, dass der Einlass (4) im oberen und der Auslass (7) im unteren Bereich der Stirnflächen oder umgekehrt angeordnet sind.

10. Vorrichtung gemäss Anspruch 5, dadurch gekennzeichnet, dass die auslasseitige
Stirnfläche grossflächig durchbrochen ist
und in einen Trichter mündet, an dem ein
Schlauch als Zuführung zu der Spritzdüse
angeordnet ist.

11. Vorrichtung gemäss Anspruch 10, dadurch
gekennzeichnet, dass der zylindrische
Mantel (5) auslasseitig in einen Trichter
übergeht und die einlasseitig fliegend
gelagerte Welle (2) sich in den Trichter
erstreckt.

12. Vorrichtung gemäss Anspruch 10, dadurch
gekennzeichnet, dass sich die in der
durchbrochenen Stirnfläche gelagerte
Welle (2) der Wirbelkammer (1) in den
Trichter erstreckt und auf dem Wellenende
ein oder mehrere konische Räumflügel
angeordnet sind.

13. Vorrichtung gemäss Ansprüchen 1 und 4,
dadurch gekennzeichnet, dass auf der
Welle (2) der Wirbelkammer (1) mehrere
Reihen von Flügeln (3) angeordnet sind,
die gegeneinander versetzt sind.

14. Vorrichtung gemäss Ansprüchen 5 und 13
dadurch gekennzeichnet, dass der Durchmesser des von den sich drehenden Flügeln
(3) beschriebenen Zylinders nahezu dem
Innendurchmesser des zylindrischen
Mantels (5) der Wirbelkammer (1) entspricht.

15. Vorrichtung gemäss Anspruch 5, dadurch gekennzeichnet, dass auf der Welle (2)
der Wirbelkammer (1) im Bereich der
auslassseitigen Stirnfläche ein oder
mehrere Räumflügel (8) angeordnet sind.

16. Vorrichtung nach vorangehenden Ansprüchen, dadurch gekennzeichnet, dass
die Wirbelkammer (1) konisch sich zum
Auslass hin verjüngend ausgebildet ist.

17. Vorrichtung nach Anspruch 16, dadurch
gekennzeichnet, dass die Welle (2) an der
einlasseitigen Stirnfläche fliegend
gelagert ist.

18. Vorrichtung gemäss Anspruch 16, dadurch
gekennzeichnet, dass die Welle (2) im
unteren Bereich des Trichters in der Nabe
eines Speichenrades gelagert ist.

0065255